(19) Europäisches Patentamt
European Patent Office
Office européen des brevets

(11) **EP 3 823 366 A1**

(12) **EUROPEAN PATENT APPLICATION**
published in accordance with Art. 153(4) EPC

(43) Date of publication:
**19.05.2021 Bulletin 2021/20**

(51) Int Cl.:
***H04W 56/00*** *(2009.01)*

(21) Application number: **18927183.6**

(22) Date of filing: **16.07.2018**

(86) International application number:
**PCT/CN2018/095852**

(87) International publication number:
**WO 2020/014846 (23.01.2020 Gazette 2020/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **GUANGDONG OPPO MOBILE
TELECOMMUNICATIONS
CORP., LTD.
Dongguan Guangdong 523860 (CN)**

(72) Inventor: **XU, Weijie
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **METHOD AND DEVICE FOR DETERMINING SYNCHRONIZATION SOURCE PRIORITY, AND COMPUTER STORAGE MEDIUM**

(57) Disclosed are a method and device for determining a synchronization source priority, and a computer storage medium. The method comprises: a terminal determining first synchronization source priority information based on capability information and/or service level information of the terminal; and the terminal sending the first synchronization source priority information.

FIG. 2

EP 3 823 366 A1

**Description**

TECHNICAL FIELD

The disclosure relates to wireless communication technology, and particularly to a method and a device for determining a synchronization source priority and a computer storage medium.

BACKGROUND

In a Vehicle-to-Everything (V2X) protocol, synchronization between different node devices may be categorized into the following three types of synchronization according to a synchronization source: 1: synchronization through a Global Navigation Satellite System (GNSS), 2: synchronization through a cellular base station, and 3: synchronization through a User Equipment (UE).

A priority of a synchronization source is determined in a pre-configuration manner. The priority of the synchronization source is pre-configured based on whether a terminal is in coverage of a signal of a base station or not. However, the synchronization source determined by the above solution is not optimal. For example, in a scenario that the terminal is in the coverage of the signal of the base station and quality of a communication signal of the terminal is poor, determining a synchronization source with a highest priority according to the above solution may cause service interruption or delay due to a signal quality problem.

SUMMARY

The embodiments of the disclosure provide a method and device for determining a synchronization source priority and a computer storage medium, to timely and effectively select a synchronization source with a highest priority for synchronization.

A first aspect provides a method for determining a synchronization source priority, which may include operations as follows. A terminal determines first synchronization source priority information based on capacity information and/or service class information of the terminal. The terminal sends the first synchronization source priority information.

A second aspect provides a terminal, which may include a processing unit and a communication unit.

The processing unit may be configured to determine first synchronization source priority information based on capacity information and/or service class information of the terminal.

The communication unit may be configured to send the first synchronization source priority information determined by the processing unit.

A third aspect provides a terminal, which may include a processor and a memory. The memory may be configured to store a computer program, and the processor may be configured to call and run the computer program stored in the memory to execute the method in the first aspect or each implementation mode thereof.

A fourth aspect provides a processor, the processor may be configured to call and run a computer program in a memory to implement the method in the first aspect or each implementation mode thereof.

A fifth aspect provides a computer program stored thereon, the program, when being executed by a processor, implements the method in the first aspect or each implementation mode thereof.

A sixth aspect provides a computer program product, which may include a computer program instruction. The computer program instruction enables a computer to execute the method in the first aspect or each implementation mode thereof.

A seventh aspect provides a computer program. The computer program, when being run in a computer, enables the computer to execute the method in the first aspect or each implementation mode thereof.

With the above technical solutions, the terminal determines synchronization source priority information based on capacity information and/or service class information thereof, and sends the synchronization source priority information to a node device (for example, sending to another terminal, a base station or a relay device), to implement Quality of Service (QoS) guarantee based on the capacity information and/or service class information of the terminal. The terminal may timely and effectively select a synchronization source with a highest priority for synchronization, thereby ensuring continuity of a service, and reducing delay or service interruption caused by a problem such as unnecessary handover.

BRIEF DESCRIPTION OF THE DRAWINGS

FIG. 1 is a schematic architecture diagram of a communication system according to an embodiment of the disclosure.

FIG. 2 is a first flowchart of a method for determining synchronization source priority according to an embodiment of the disclosure.

FIG. 3 is a second flowchart of a method for determining synchronization source priority according to an embodiment of the disclosure.

FIG. 4 is a schematic diagram of a method for determining synchronization source priority according to an embodiment of the disclosure.

FIG. 5 is a third flowchart of a method for determining synchronization source priority according to an embodiment of the disclosure.

FIG. 6 is a schematic block diagram of a terminal according to an embodiment of the disclosure.

FIG. 7 is a schematic block diagram of a hardware composition of a terminal according to an embodiment of the disclosure.

FIG. 8 is a schematic structure diagram of a chip according to another embodiment of the disclosure.

DETAILED DESCRIPTION

The technical solutions in the embodiments of the disclosure are described below in combination with the drawings in the embodiments of the disclosure. Apparently, the described embodiments are only a part rather than all of the embodiments of the disclosure. All other embodiments obtained by those skilled in the art on the basis of the embodiments in the disclosure without paying creative work fall within the scope of protection of the disclosure.

The technical solutions of the embodiments of the disclosure may be applied to various communication systems such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system and a 5th-Generation (5G) system.

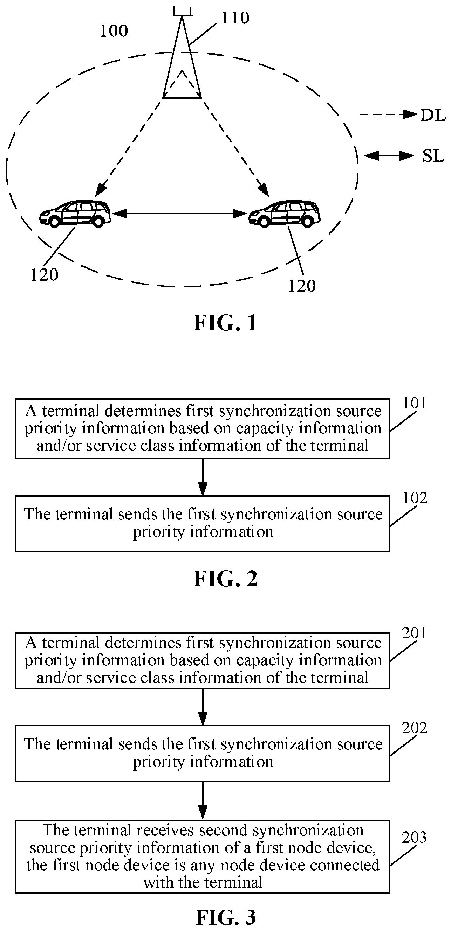

Exemplarily, a communication system 100 in the embodiments of the disclosure may be illustrated in FIG. 1, and the communication system 100 may include a network device 110. The network device 110 may be a device communicating with a terminal device 120 (a communication terminal or a terminal). The network device 110 may provide a communication coverage for a particular geographical area and communicate with a terminal device located in the coverage. Optionally, the network device 110 may be a base station (a Base Transceiver Station (BTS)) in a GSM system or a CDMA system, a base station (a NodeB (NB)) in a WCDMA system, an evolutional base station (an Evolutional Node B (eNB or eNodeB)) in an LTE system, a wireless controller in a Cloud Radio Access Network (CRAN). Alternatively, the network device may be a mobile exchange center, a relay station, an access point, an on-board device, a wearable device, a hub, a switch, a bridge, a router, a network side device in a 5G network, a network device in a future evolutional Public Land Mobile Network (PLMN) or the like.

The communication system 100 further includes at least one terminal device 120 in the coverage of the network device 110. The terminal device used herein includes but is not limited to be connected via a wired line such as a Public Switched Telephone Network (PSTN), a Digital Subscriber Line (DSL), a digital cable, a direct cable, and/or via another data connection or network, and/or via a wireless interface such as a cellular network, a wireless local area network (WLAN), a digital television network like a Digital Video Broadcasting-Handheld (DVB-H) network, a satellite network, an Amplitude Modulation-Frequency Modulation (AM-FM) broadcasting transmitter, and/or via a device, which is configured to receive/send a communication signal, of another terminal device and/or an Internet of Things (IoT) device. The terminal device configured to communicate through the wireless interface may be referred to as "a wireless communication terminal", "a wireless terminal" or "a mobile "terminal".

Examples of a mobile terminal in the embodiments of the disclosure include, but are not limited to, an on-board terminal, and the on-board terminal may communicate through an On Board Unit (OBU). As an example, an on-board terminal may communicate with another on-board terminal through an OBU. The on-board terminal may also be a terminal of a personal communication system (PCS) combining a cellular radio phone and data processing, data processing, faxing and data communication capacities.

Optionally, Device to Device (D2D) communication may be performed between the terminals 120.

Optionally, the 5G system or the 5G network may also be called a New Radio (NR) system or an NR network.

One network device and two terminals are exemplarily shown in FIG. 1. Optionally, the communication system 100 may include multiple network devices, and each of the network devices may have other number of terminals in coverage thereof, which is not limited in the embodiments of the disclosure.

Optionally, the communication system 100 may further include another network entity such as a network controller and a mobility management entity, which is not limited in the embodiments of the disclosure.

It is to be understood that a device with a communication function in the network/system in the embodiments of the disclosure may be called a communication device. Taking the communication system 100 shown in FIG. 1 as an example, the communication device may include the network device 110 and terminal 120 with the communication function, and the network device 110 and the terminal 120 may be the specific devices mentioned above and will not be elaborated herein. The communication device may further include other devices in the communication system 100, for example, other network entities like a network controller and a mobility management entity, which is not limited in the embodiments of the disclosure.

It should be understood that the terms "system" and "network" are often used interchangeably herein. The term "and/or" herein only represent an association relationship of associated objects, which means that there may be three relationships. For example, A and/or B can mean: only A exists, both A and B exist, and only B exists. In addition, the character "/" herein generally indicates that there is an "or" relationship between two associated objects.

The embodiments of the disclosure provide a method for determining a synchronization source priority. FIG. 2 is a first flowchart of a method for determining a synchronization source priority according to an embodiment of the disclosure. As shown in FIG. 2, the method includes the following operations.

In 101, a terminal determines first synchronization source priority information based on capacity information and/or service class information of the terminal.

In 102, the terminal sends the first synchronization source priority information.

In the embodiment, the terminal determines capacity information of the terminal based on first-type information. The first-type information includes at least one of the following information: clock accuracy, a phase-locked loop frequency deviation, battery power and transmission power. The capacity information of the terminal is positively related to the first-type information. It can be understood that, with improvement of the clock accuracy, the phase-locked loop frequency deviation increases , the battery power increases and the transmission power increases, the capacity information of the terminal can strongly characterize the capacity of the terminal.

Herein, the first-type information is related to the capacity of the terminal. The terminal obtains the first-type information and determines the capacity information of the terminal based on the first-type information.

As an implementation mode, the operation that the terminal determines the capacity information of the terminal based on the first-type information includes an operation that the terminal performs weighting summation processing on the information in the first-type information to determine the capacity information of the terminal.

As an example, if the first-type information includes the clock accuracy, the phase-locked loop frequency deviation, the battery power and the transmission power, a weight value is pre-configured for each piece of information in the first-type information. For example, a weight value of the clock accuracy is a1, a weight value of the phase-locked loop frequency deviation is b1, a weight value of the battery power is c1, and a weight value of the transmission power is d1. In such case, the capacity information (recorded as V-capacity) of the terminal may be represented as the following expression:

$$\text{V-capacity} = a1*\text{clock accuracy} + b1*\text{phase-locked loop frequency deviation} + c1*\text{battery power} + d1*\text{transmission power}.$$

In the embodiment, the terminal determines the service class information based on second-type information. The second-type information includes at least one of the following information: a transmission rate of service data, a compression coding manner for service data, an emergency degree of service data and clarity of service data.

Herein, the second-type information is related to a service transmitted by the terminal. The terminal obtains the second-type information and determines the service class information based on the second-type information.

As an implementation mode, the operation that the terminal determines the service class information based on the second-type information includes operations as follows. The terminal performs weighting summation processing on the information in the second-type information to determine an initial service class, and the terminal determines the service class information based on a maximum value in the initial service class and a preset service class.

As an example, if the second-type information includes the transmission rate of the service data, the compression coding manner for the service data, the emergency degree of the service data and the clarity of the service data, a weight value is pre-configured for each piece of information in the second-type information. For example, a weight value of the transmission rate of the service data is a2, a weight value of the compression coding manner for the service data is b2, a weight value of the emergency degree of the service data is c2, and a weight value of the clarity of the service data is d2. In such case, the initial service class may be represented as the following expression.

$$\text{Initial service class} = a2 * \text{transmission rate of the service data} + b2 * \text{compression coding manner for the service data} + c2 * \text{emergency degree of the service data} + d2 * \text{clarity of the service data}.$$

The terminal pre-obtains or preconfigures a service class corresponding to the service, and compares the obtained initial service class and the preset service class to obtain a maximum value of a comparison result, and determines the maximum value as the service class information.

As an example, the service class information (recorded as V-QoS) may be represented as the following expression.

$$\text{V-QoS} = \max\{a2 * \text{transmission rate of the service data} + b2 * \text{compression coding manner for the service data} + c2 * \text{emergency degree of the service data} + d2 * \text{clarity of the service data, QoS class}\}.$$

In the embodiment, the terminal determines the first synchronization source priority information based on the obtained capacity information and/or service class information of the terminal and sends the first synchronization source priority information. Herein, the first synchronization source priority information includes the capacity information and/or service class information of the terminal. As an implementation mode, the first synchronization source priority information is sent through signaling, a specific bit in which may be used to represent the first synchronization source priority information. For example, the first synchronization source priority information includes the capacity information and the service class information of the terminal. The first four bits in eight bits may be used to represent the capacity information of the terminal, and the last four bits of the eight bits may be used to to represent the service class information. Of course, the disclosure is not limited to the above example, and another manner of carrying synchronization source priority information also falls in the scope of protection of the disclosure.

As an implementation mode, the operation that the terminal sends the first synchronization source priority information includes an operation that the terminal sends the first synchronization source priority information in a broadcast, unicast or multicast manner.

Herein, the terminal sends the first synchronization source priority information to a node device, and the node device includes at least one node device of another terminal, a base station or a relay device. As a first implementation mode, the terminal may send the first synchronization source priority information to the node device in the unicast manner, or sequentially send the first synchronization source priority information to at least two node devices in the unicast manner. As a second implementation mode, the terminal may send the first synchronization source priority information to the at least two node devices in the multicast manner. As a third implementation mode, the terminal may send the first synchronization source priority information in the broadcast manner, such that the node device receives the first synchronization source priority information.

As an implementation mode, the method further includes an operation that the terminal updates a first synchronization source priority list at a first period based on the first synchronization source priority information.

Herein, the terminal pre-configures a synchronization source priority list (recorded as a first synchronization source priority list). As an implementation mode, a synchronization source priority is pre-configured in the first synchronization source priority list. For example, the configured synchronization source priority may include a priority relationship among a GNSS, an eNB and UE. As another implementation mode, the first synchronization source priority list may further include synchronization source priority information sent by another node device. In the embodiment, after the first synchronization source priority information is obtained, the first synchronization source priority list is updated at a first period. It can be understood that, whether a time from last updating of the first synchronization source priority list reaches the first period is detected upon obtaining the first synchronization source priority information, and after the time interval reaches the first period, the first synchronization source priority list is updated based on the obtained first synchronization source priority information.

As an implementation mode, the operation that the terminal sends the first synchronization source priority information includes an operation that the terminal sends the first synchronization source priority information at a second period.

In the embodiment, the first period and the second period are determined based on a service measurement period. The first period and the second period are identical or different.

As an example, if the service measurement period meets {20, 50, 100, 200, ..., 1,000} milliseconds (ms), as an implementation mode, the first period and the second period are identical, and the first period and the second period may be configured to be a present service measurement period, or any service measurement period in an optional range that the service measurement period meets, for example, any service measurement period in the service measurement period set described above. As another implementation mode, the first period and the second period are different. Optionally, the first period is shorter than the second period, or the first period is longer than the second period.

With the technical solution of the embodiment of the disclosure, on one hand, the terminal determines the synchronization source priority information based on the capacity information and/or the service class information thereof and sends the synchronization source priority information to a node device (for example, to another terminal, a base station or a relay device), to implement Quality of Service (QoS) guarantee based on the capacity information and/or service class information of the terminal. The terminal may timely and effectively select a synchronization source with a highest priority for synchronization, thereby ensuring continuity of a service, and reducing delay or service interruption caused by a problem such as unnecessary handover. On the other hand, the terminal periodically and dynamically maintains the synchronization source priority list and periodically sends synchronization source priority information, thereby improving timeliness and stability of synchronous communication between the terminal and an optimal synchronization source.

The embodiments of the disclosure also provide a method for determining a synchronization source priority. FIG. 3 is a second flowchart of a method for determining a synchronization source priority according to an embodiment of the disclosure. As shown in FIG. 3, the method includes the following operations.

In 201, a terminal determines first synchronization source priority information based on capacity information and/or service class information of the terminal.

In 202, the terminal sends the first synchronization source priority information at a second period.

In 203, the terminal receives second synchronization source priority information of a first node device. The first node device is any node device connected with the terminal.

In the embodiment, detailed description for operations 101 to 102 in the abovementioned embodiment may be referred regarding the operations 201 to 202, which are not described repeatedly here.

In the embodiment, the operation that the terminal receives the second synchronization source priority information of the first node device includes an operation that the terminal receives the second synchronization source priority information which is sent by the first node device in a unicast, multicast or broadcast manner. Herein, the second synchronization source priority information is synchronization source priority information obtained by the first node device. As an example, the second synchronization source priority information may be synchronization source priority information which is determined by a terminal serving as the first node device based on capacity information and/or service class information thereof.

Herein, the second synchronization source priority information is synchronization source priority information obtained by the first node device, and the first node device includes at least one node device of another terminal, a base station or a relay device. As a first implementation mode, the first node device sends the second synchronization source priority information in a unicast manner, and the terminal may receive the second synchronization source priority information in the unicast manner. As a second implementation mode, the first node device sends the second synchronization source priority information in a multicast manner, and the terminal may receive the second synchronization source priority information in the multicast manner. As a third implementation mode, the first node device may send the second synchronization source priority information in a broadcast manner such that the terminal receives the second synchronization source priority information.

In another embodiment, the method further includes an operation that the terminal updates the first synchronization source priority list thereof based on the first synchronization source priority information and the second synchronization source priority information. The first synchronization source priority list includes multiple synchronization sources sequenced based on synchronization source priority information. The terminal determines the synchronization source with a highest priority based on the first synchronization source priority list.

In the embodiment, a sequence of the synchronization sources in the first synchronization source priority list is related to priorities of the synchronization sources. The priority of the synchronization source is positively related to the capacity information and/or service class information of the terminal. It can be understood that, when the synchronization sources in the first synchronization source priority list are sequenced in descending order of the priorities, the capacity information of the terminal indicates a capacity of the terminal, the higher the capability of the terminal, the higher the priority is and the earlier the synchronization source is ranked. The service class information indicates a service class, the higher the service class is, the higher the priority is and the earlier synchronization source is ranked.

As an implementation mode, in correlations between the capacity information and the service class information of the terminal, and the rank of the synchronization source in the first synchronization source priority list, the correlation of the service class information with the rank of the synchronization source is higher than the correlation with the capacity information of the terminal with the rank of the synchronization sources, to at least ensure a service requirement of the terminal.

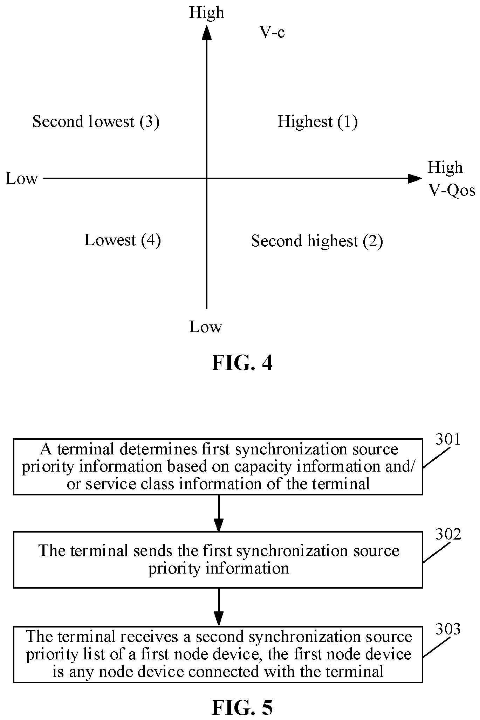

As an example, as shown in FIG. 4, if there is synchronization source priority information of three terminals, and each piece of synchronization source priority information includes capacity information (recorded as V-capacity, abbreviated as V-c) and service class information (recorded as V-QoS) of the terminal. V-capacities and V-QoS of the three terminals may be compared to obtain the following result.

If both V-capacity and V-QoS of a terminal are higher than those of other terminals, a priority of a synchronization source corresponding to the terminal is the highest, as shown in the first quadrant in FIG. 4. If V-QoS of a terminal is high and the V-capacity of the terminal is low, a priority of a synchronization source corresponding to the terminal is the second highest. If V-QoS of a terminal is low and V-capacity of the terminal is high, a priority of a synchronization source corresponding to the terminal is the second lowest. If both the V-capacity and V-QoS of a terminal are low, a priority of a synchronization source corresponding to the terminal is the lowest.

It can be understood that, if V-capacity and/or V-QoS of a terminal is high, a priority of a synchronization source corresponding to the terminal is improved.

In an embodiment, the operation that the terminal determines the synchronization source with the highest priority based on the synchronization source priority list includes an operation that when the terminal is in a first mode, the synchronization source with the highest priority is determined based on a sequence in the first synchronization source priority list. Quality of communication between the terminal and a network device does not meet a preset requirement when the terminal is in the first mode.

In the embodiment, the terminal may independently select a transmission resource in the first mode. It can be understood that the first mode is a transmission mode and the quality of communication between the terminal in the first mode and the network device does not meet the preset requirement. As an example, the terminal in the first mode may not receive a communication signal of the network device, for example, in a scenario that the terminal may not receive a signal of a base station, i.e., a scenario that the terminal is an Out Of Coverage (OOC). As another example, the terminal in the first mode may receive the communication signal of the network device, but the communication signal is relatively poor and cannot meet the communication requirement. The network device may be a network device of an access network such as the base station, or may also be a satellite network device.

In an embodiment, the method further includes an operation that when the terminal is in a second mode, the terminal determines the synchronization source based on a pre-configured synchronization source priority. The quality of communication between the terminal and the network device meets the preset requirement when the terminal is in the second mode.

Herein, like the first mode, the second mode is a transmission mode, and the quality of communication between the terminal and the network device meets the preset requirement when the terminal is in the second mode. For example, the terminal is in an In Coverage (IC) scenario and the quality of communication is good. As an example, the terminal in the first mode may receive the communication signal of the network device, the communication signal is relatively good, and can meet the communication requirement. The network device is a network device of an access network such as a base station.

In the embodiment, when the terminal is in the second mode, the terminal determines the synchronization source based on the pre-configured synchronization source priority. For example, priorities of a synchronization source GNSS and a synchronization source eNB are preconfigured to be higher than a priority of a synchronization source UE, which may be represented as {GNSS, eNB}>UE. The priority of the selected synchronization source GNSS or eNB is configurable, and the synchronization source with the highest priority is determined according to a pre-configuration result.

In an embodiment, the method further includes an operation that the terminal sends the determined synchronization source with the highest priority.

In the embodiment, the terminal sends the determined synchronization source with the highest priority to the node device through indication information. As an implementation mode, the indication information may include a preset number of bits, and different types of synchronization sources are represented through different bits. For example, the indication information includes four bits. The first bit of the four bits may represent that the synchronization source is the base station. If the first bit is "1", it may be indicated that the determined synchronization source with the highest priority is the base station. If the first bit is "0", it may be indicated that the base station is not the synchronization source with the highest priority. The other bits except the first bit may represent the terminal.

The terminal may send the synchronization source with the highest priority in a unicast, multicast or broadcast manner.

In an embodiment, the method further includes an operation that the terminal sends the second synchronization source priority information to a second node device. The second node device is another node device, except the first node device, in node devices connected with the terminal.

Herein, the terminal sends the second synchronization source priority information to the second node device in a broadcast, unicast or multicast manner. The second node device may be a node device connected with the terminal, such as another terminal, or a base station or a relay device.

In the embodiment, the terminal may form a multi-hop network with the first node device and the second node device, and the terminal sends the second synchronization source priority information obtained from the first node device to the second node device to share the synchronization source priority information.

The terminal may send the second synchronization source priority information to the second node device at a third period. Alternatively, the terminal, upon obtaining the second synchronization source priority information, may send the second synchronization source priority information to the second node device. The third period is determined based on a service measurement period. The third period may be identical with as a first period and/or a second period, and may also be different from the first period and/or the second period.

In an embodiment, the method further includes an operation that the terminal sends the first synchronization source priority list to the second node device. The second node device is another node device, except the first node device, in the node devices connected with the terminal.

Herein, the terminal sends the first synchronization source priority list to the second node device in a broadcast, unicast or multicast manner. The second node device may be a node device connected with the terminal, such as another terminal, or a base station or a relay device.

In the embodiment, the terminal may form a multi-hop network with the first node device and the second node device, and the terminal sends a first synchronization source priority list thereof to the second node device to share the synchronization source priority information in the synchronization source priority list.

The terminal may send the first synchronization source priority list to the second node device at a fourth period. The fourth period is determined based on the service measurement period. The third period may be identical with the first period and/or the second period, and may also be different from the first period and/or the second period.

With the technical solution of the embodiment of the disclosure, on one hand, the terminal determines synchronization source priority information based on capacity information and/or service class information thereof and sends the synchronization source priority information to a node device (for example, to another terminal, a base station or a relay device), to implement Quality of Service (QoS) guarantee based on the capacity information and/or service class information of the terminal. The terminal may timely and effectively select a synchronization source with a highest priority for synchronization, thereby ensuring continuity of a service, and reducing delay or service interruption caused by a problem such as unnecessary handover. On the other hand, the terminal periodically and dynamically maintains the synchronization source priority list and periodically sends synchronization source priority information, thereby improving timeliness and stability of synchronous communication between the terminal and an optimal synchronization source.

The embodiments of the disclosure further provide a method for determining a synchronization source priority. FIG. 5 is a third flowchart of a method for determining a synchronization source priority according to an embodiment of the disclosure. As shown in FIG. 5, the method includes the following operations.

In 301, a terminal determines first synchronization source priority information based on capacity information and/or service class information of the terminal.

In 302, the terminal sends the first synchronization source priority information at a second period.

In 303, the terminal receives a second synchronization source priority list of a first node device. The first node device is any node device connected with the terminal.

In the embodiment, detailed description for operations 101 to 102 in the abovementioned embodiment may be referred regarding the operations 301 to 302, which are not described repeatedly here.

In the embodiment, the operation that the terminal receives the second synchronization source priority list of the first node device includes an operation that the terminal receives the second synchronization source priority list which is sent by the first node device in a unicast, multicast or broadcast manner. Herein, the second synchronization source priority list is a synchronization source priority list stored in the first node device. The second synchronization source priority list may include synchronization source priority information which is determined by a terminal serving as the first node device based on capacity information and/or service class information thereof.

Herein, the first node device includes at least one node device of another terminal, a base station or a relay device. As a first implementation mode, the first node device sends the second synchronization source priority list in a unicast manner, and the terminal may receive the second synchronization source priority list in the unicast manner. As a second implementation mode, the first node device sends the second synchronization source priority list in a multicast manner, and the terminal may receive the second synchronization source priority list in the multicast manner. As a third implementation mode, the first node device may send the second synchronization source priority list in a broadcast manner such that the terminal receives the second synchronization source priority list.

In another embodiment, the method further includes an operation that the terminal updates a first synchronization source priority list thereof based on the second synchronization source priority list, and the terminal determines a synchronization source with a highest priority based on the first synchronization source priority list.

A sequence of synchronization sources in the first synchronization source priority list is related to priorities of the synchronization sources, and the priority of the synchronization source is positively related to the capacity information and/or service class information of the terminal. The same principle is adopted for a sequence of synchronization sources in the second synchronization source priority list. It can be understood that, when the synchronization sources in the synchronization source priority list (including the first synchronization source priority list and the second synchronization source priority list) are ranked in descending order of the priorities, the capacity information of the terminal indicates a capacity of the terminal, the higher the capability of the terminal, the higher the priority is and the earlier the synchronization source is ranked. The service class information indicates a service class, the higher the service class is, the higher the priority is and the earlier synchronization source is ranked

As an implementation mode, in correlations between the capacity information and the service class information of the terminal, and the rank of the synchronization source in the first synchronization source priority list, the correlation of the service class information with the rank of the synchronization source is higher than the correlation with the capacity information of the terminal with the rank of the synchronization sources, to at least ensure a service requirement of the terminal.

As an example, as shown in FIG. 4, if there is synchronization source priority information of three terminals, and each piece of synchronization source priority information includes capacity information (recorded as V-capacity, abbreviated as V-capacity) and service class information (recorded as V-QoS) of the terminal. V-capacities and V-QoS of the three terminals may be compared to obtain the following result.

If both V-capacity and V-QoS of a terminal are higher than those of other terminals, a priority of a synchronization source corresponding to the terminal is the highest, as shown in the first quadrant in FIG. 4. If V-QoS of a terminal is high and the V-capacity of the terminal is low, a priority of a synchronization source corresponding to the terminal is the second highest. If V-QoS of a terminal is low and V-capacity of the terminal is high, a priority of a synchronization source corresponding to the terminal is the second lowest. If both the V-capacity and V-QoS of a terminal are low, a priority of a synchronization source corresponding to the terminal is the lowest.

It can be understood that, if V-capacity and/or V-QoS of a terminal is high, a priority of a synchronization source corresponding to the terminal is improved.

In an embodiment, the operation that the terminal determines the synchronization source with the highest priority based on the synchronization source priority list includes an operation that when the terminal is in a first mode, the synchronization source with the highest priority is determined based on a sequence in the first synchronization source priority list. Quality of communication between the terminal and a network device does not meet a preset requirement when the terminal is in the first mode.

In the embodiment, the terminal may independently select a transmission resource in the first mode. It can be understood that the first mode is a transmission mode and the quality of communication between the terminal in the first mode and the network device does not meet the preset requirement. As an example, the terminal in the first mode may not receive a communication signal of the network device, for example, in a scenario that the terminal may not receive a signal of a base station, i.e., a scenario that the terminal is an Out Of Coverage (OOC). As another example, the terminal in the first mode may receive the communication signal of the network device, but the communication signal is relatively poor and cannot meet the communication requirement. The network device may be a network device of an access network such as the base station.

In an embodiment, the method further includes an operation that when the terminal is in a second mode, the terminal determines the synchronization source based on a pre-configured synchronization source priority. The quality of communication between the terminal and the network device meets the preset requirement when the terminal is in the second mode.

Herein, like the first mode, the second mode is a transmission mode, and the quality of communication between the terminal and the network device meets the preset requirement when the terminal is in the second mode. For example, the terminal is in an In Coverage (IC) scenario and the quality of communication is good. As an example, the terminal in the first mode may receive the communication signal of the network device, the communication signal is relatively good, and can meet the communication requirement. The network device is a network device of an access network such as a base station, or may also be a satellite network device.

In the embodiment, when the terminal is in the second mode, the terminal determines the synchronization source based on the pre-configured synchronization source priority. For example, priorities of a synchronization source GNSS and a synchronization source eNB are preconfigured to be higher than a priority of a synchronization source UE, which may be represented as {GNSS, eNB}>UE. The priority of the selected synchronization source GNSS or eNB is configurable, and the synchronization source with the highest priority is determined according to a pre-configuration result.

In an embodiment, the method further includes an operation that the terminal sends the determined synchronization source with the highest priority.

In the embodiment, the terminal sends the determined synchronization source with the highest priority to the node device through indication information. As an implementation mode, the indication information may include a preset number of bits, and different types of synchronization sources are represented through different bits. For example, the indication information includes four bits. The first bit of the four bits may represent that the synchronization source is the base station. If the first bit is "1", it may be indicated that the determined synchronization source with the highest priority is the base station. If the first bit is "0", it may be indicated that the base station is not the synchronization source with the highest priority. The other bits except the first bit may represent the terminal.

The terminal may send the synchronization source with the highest priority in the unicast, multicast or broadcast manner.

In an embodiment, the method further includes an operation that the terminal sends the first synchronization source priority list to a second node device. The second node device is another node device, except the first node device, in node devices connected with the terminal.

Herein, the terminal sends the first synchronization source priority list to the second node device in the broadcast, unicast or multicast manner. The second node device may be a node device connected with the terminal, such as another terminal, or a base station or a relay device.

In the embodiment, the terminal may form a multi-hop network with the first node device and the second node device, and the terminal sends a first synchronization source priority list thereof to the second node device to share the synchronization source priority information in the synchronization source priority list.

The terminal may send the first synchronization source priority list to the second node device at a fourth period. The fourth period is determined based on the service measurement period. The third period may be identical with the first period and/or the second period, and may also be different from the first period and/or the second period.

In an embodiment, the method further includes an operation that the terminal sends the second synchronization source priority list to the second node device, the second node device is another node device, except the first node device, in the node devices connected with the terminal.

Herein, the terminal sends the second synchronization source priority list to the second node device in a broadcast, unicast or multicast manner. The second node device may be a node device connected with the terminal, such as another terminal, or a base station or a relay device.

With the technical solution of the embodiment of the disclosure, on one hand, the terminal determines synchronization source priority information based on capacity information and/or service class information thereof and sends the synchronization source priority information to a node device (for example, to another terminal, a base station or a relay device), to implement Quality of Service (QoS) guarantee based on the capacity information and/or service class information of the terminal. The terminal may timely and effectively select a synchronization source with a highest priority for synchronization, thereby ensuring continuity of a service, and reducing delay or service interruption caused by a problem such as unnecessary handover. On the other hand, the terminal periodically and dynamically maintains the synchronization source priority list and periodically sends synchronization source priority information, thereby improving timeliness and stability of synchronous communication between the terminal and an optimal synchronization source.

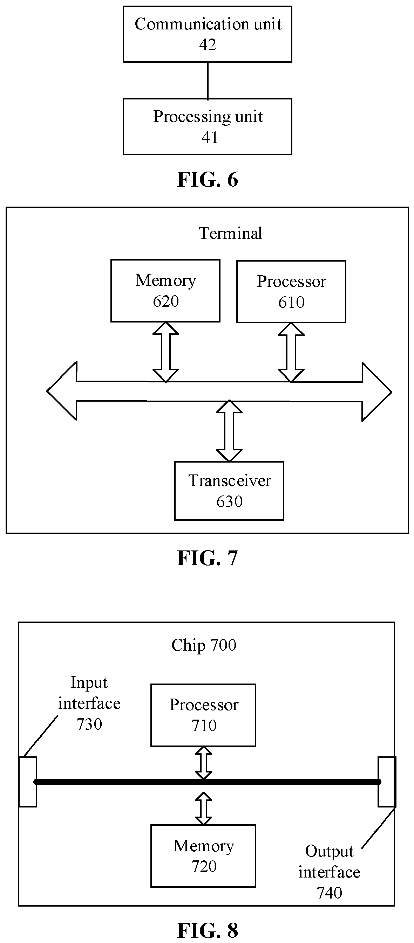

The embodiments of the disclosure further provide a terminal. FIG. 6 is a schematic block diagram of a terminal according to an embodiment of the disclosure. As shown in FIG. 6, the terminal includes a processing unit 41 and a communication unit 42.

The processing unit 41 is configured to determine first synchronization source priority information based on capacity information and/or service class information of the terminal.

The communication unit 42 is configured to send the first synchronization source priority information determined by the processing unit 41.

In an embodiment, the processing unit 41 is further configured to determine the capacity information of the terminal based on first-type information. The first-type information includes at least one of the following information: clock accuracy, a phase-locked loop frequency deviation, battery power and transmission power.

In the embodiment, the processing unit 41 is configured to perform weighting summation processing on the information in the first-type information, to determine the capacity information of the terminal.

In an embodiment, the processing unit 41 is further configured to determine the service class information based on second-type information. The second-type information includes at least one of the following information: a transmission rate of service data, a compression coding manner for the service data, an emergency degree of the service data and clarity of the service data.

In the embodiment, the processing unit 41 is configured to: perform weighting summation processing on the information in the second-type information, to determine an initial service class; and determine the service class information based on a maximum value in the initial service class and a preset service class.

In an embodiment, the communication unit 42 is configured to send the first synchronization source priority information in a broadcast, unicast or multicast manner.

In an embodiment, the processing unit 41 is further configured to update a first synchronization source priority list at a first period based on the first synchronization source priority information.

In an embodiment, the communication unit 42 is configured to send the first synchronization source priority information at a second period.

In the embodiment, the first period and the second period are determined based on a service measurement period. The first period and the second period are identical or different.

The embodiments of the disclosure further provide a terminal. As shown in FIG. 6, the terminal includes a processing unit 41 and a communication unit 42.

The processing unit 41 is configured to determine first synchronization source priority information based on capacity information and/or service class information of the terminal.

The communication unit 42 is configured to send the first synchronization source priority information determined by the processing unit 41, and is further configured to receive second synchronization source priority information of a first node device. The first node device is any node device connected with the terminal.

In the embodiment, the communication unit 42 is configured to receive the second synchronization source priority information sent by the first node device in a unicast, multicast or broadcast manner.

In an embodiment, the processing unit 41 is further configured to update a first synchronization source priority list based on the first synchronization source priority information and the second synchronization source priority information. The first synchronization source priority list includes multiple synchronization sources ranked based on synchronization source priority information.

The processing unit 41 is further configured to determine a synchronization source with a highest priority based on the first synchronization source priority list.

In an embodiment, a sequence of the synchronization sources in the first synchronization source priority list is related to priorities of the synchronization sources, and the priority of the synchronization source is positively related to the capacity information and/or service class information of the terminal.

As an implementation mode, the processing unit 41 is configured to determine the synchronization source with the highest priority based on the sequence in the first synchronization source priority list in a case that the terminal is in a first mode. Quality of communication between the terminal and a network device does not meet a preset requirement in a case that the terminal is in the first mode.

In another embodiment, the processing unit 41 is further configured to determine the synchronization source based on a pre-configured synchronization source priority in a case that the terminal is in a second mode. The quality of communication between the terminal and the network device meets the preset requirement in a case that the terminal is in the second mode.

In an embodiment, the communication unit 42 is further configured to send the second synchronization source priority information to a second node device. The second node device is another node device, except the first node device, in node devices connected with the terminal.

In an embodiment, the communication unit 42 is further configured to send the first synchronization source priority list to the second node device. The second node device is another node device, except the first node device, in the node devices connected with the terminal.

The embodiments of the disclosure further provide a terminal. As shown in FIG. 6, the terminal includes a processing unit 41 and a communication unit 42.

The processing unit 41 is configured to determine first synchronization source priority information based on capacity information and/or service class information of the terminal.

The communication unit 42 is configured to send the first synchronization source priority information determined by the processing unit 41, and is further configured to receive a second synchronization source priority list of a first node device. The first node device is any node device connected with the terminal.

In the embodiment, the communication unit 42 is configured to receive the second synchronization source priority list sent by the first node device in a unicast, multicast or broadcast manner.

In an embodiment, the processing unit 41 is further configured to update the first synchronization source priority list based on the second synchronization source priority list.

In the embodiment, a sequence of synchronization sources in the first synchronization source priority list is related to priorities of the synchronization sources, and the priority of the synchronization source is positively related to the capacity information and/or service class information of the terminal.

As an implementation mode, the processing unit 41 is configured to determine the synchronization source with a highest priority based on the sequence in the first synchronization source priority list in a case that the terminal is in a first mode. Quality of communication between the terminal and a network device does not meet a preset requirement in a case that the terminal is in the first mode.

As another implementation mode, the processing unit 41 is further configured to determine the synchronization source based on a pre-configured synchronization source priority in a case that the terminal is in a second mode. The quality of communication between the terminal and the network device meets the preset requirement in a case that the terminal is in the second mode.

In an embodiment, the communication unit 42 is further configured to send the first synchronization source priority list to a second node device. The second node device is another node device, except the first node device, in node devices connected with the terminal.

In an embodiment, the communication unit 42 is further configured to send the second synchronization source priority list to the second node device. The second node device is another node device, except the first node device, in the node devices connected with the terminal.

In the embodiment of the disclosure, during a practical application, the first processing unit 41 in the terminal may be implemented by a Central Processing Unit (CPU), a Digital Signal Processor (DSP), a Microcontroller Unit (MCU) or a Field-Programmable Gate Array (FPGA). During the practical application, the communication unit 42 in the terminal may be implemented by a communication module (including an infrastructure communication suite, an operating system, a communication module, a standard interface, a protocol and the like) and a transceiver antenna.

FIG. 7 is a schematic structure diagram of a hardware composition of a terminal according to an embodiment of the disclosure. The terminal shown in FIG. 7 includes a processor 610, and the processor 610 may call and run a computer program in a memory to implement the method in the embodiments of the disclosure.

Optionally, as shown in FIG. 7, the terminal may further include the memory 620. The processor 610 may call and run the computer program in the memory 620 to implement the method in the embodiments of the disclosure.

The memory 620 may be a separate device independent of the processor 610 and may also be integrated into the processor 610.

Optionally, as shown in FIG. 7, the terminal may further include a transceiver 630, and the processor 610 may control the transceiver 630 to communicate with another device, specifically sending information or data to the other device or receiving information or data sent by the other device.

The transceiver 630 may include a transmitter and a receiver. The transceiver 630 may further include one or more antennas, and the number of the antennas may be one or more.

Optionally, the terminal may be a network device in the embodiments of the disclosure, and the terminal may implement corresponding flows implemented by the network device in each method of the embodiments of the disclosure. For simplicity, elaborations are omitted herein.

Optionally, the terminal may be the mobile terminal/terminal device in the embodiments of the disclosure, and the terminal may implement corresponding flows implemented by the mobile terminal/terminal device in each method of the embodiments of the disclosure. For simplicity, elaborations are omitted herein.

The embodiments of the disclosure further provide a chip. FIG. 8 is a schematic structure diagram of a chip according to another embodiment of the disclosure. The chip 700 shown in FIG. 8 includes a processor 710, and the processor 710 may call and run a computer program in a memory to implement the method in the embodiments of the disclosure.

Optionally, as shown in FIG. 8, the chip 700 may further include the memory 720. The processor 710 may call and run the computer program in the memory 720 to implement the method in the embodiments of the disclosure.

The memory 720 may be a separate device independent of the processor 710 and may also be integrated into the processor 710.

Optionally, the chip 700 may further include an input interface 730. The processor 710 may control the input interface 730 to communicate with another device or chip, specifically acquiring information or data sent by the other device or chip.

Optionally, the chip 700 may further include an output interface 740. The processor 710 may control the output interface 740 to communicate with the other device or chip, specifically outputting information or data to the other device or chip.

Optionally, the chip may be applied to the network device of the embodiments of the disclosure, and the chip may implement corresponding flows implemented by the network device in each method of the embodiments of the disclosure. For simplicity, elaborations are omitted herein.

Optionally, the chip may be applied to the mobile terminal/terminal device of the embodiments of the disclosure, and the chip may implement corresponding flows implemented by the mobile terminal/terminal device in each method of the embodiment of the disclosure. For simplicity, elaborations are omitted herein.

It is to be understood that the chip mentioned in the embodiment of the disclosure may also be called a system-level chip, a system chip, a chip system or a system on chip, etc.

It is to be understood that the processor in the embodiment of the disclosure may be an integrated circuit chip and has a signal processing capacity. In an implementation process, each step of the method embodiments may be completed by an integrated logical circuit of hardware in the processor or an instruction in a software form. The above processor may be a universal processor, a digital signal processor (DSP), an Application Specific Integrated Circuit (ASIC), an field programmable gate array (FPGA) or another programmable logical device, discrete gate or transistor logical device and discrete hardware component. Each method, step and logical block diagram disclosed in the embodiments of the disclosure may be implemented or executed. The universal processor may be a microprocessor or the processor may also be any conventional processor and the like. The steps of the method disclosed in combination with the embodiments of the disclosure may be directly embodied to be executed and implemented by a hardware decoding processor, or executed and implemented by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and implements the steps of the method in combination with hardware.

It can be understood that the memory in the embodiment of the implemented may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the above memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other proper types.

The embodiments of the disclosure further provide a computer-readable storage medium, in which a computer program is stored, the program being executed by a processor to implement the method of the embodiments of the disclosure.

Optionally, the computer-readable storage medium may be applied to a terminal in the embodiments of the disclosure, and the computer program enables a computer to execute corresponding flows implemented by the terminal in each method of the embodiments of the disclosure. For simplicity, elaborations are omitted herein.

The embodiments of the disclosure further provide a computer program product, which includes a computer program instruction, the computer program instruction enabling a computer to execute the method of the embodiments of the disclosure.

Optionally, the computer program product may be applied to a terminal in the embodiments of the disclosure, and the computer program instruction enables the computer to execute corresponding flows implemented by the terminal in each method of the embodiments of the disclosure. For simplicity, elaborations are omitted herein.

The embodiments of the disclosure further provide a computer program, which runs in a computer to enable the computer to execute the method of the embodiments of the disclosure.

Optionally, the computer program may be applied to a terminal in the embodiments of the disclosure, and the computer program runs in the computer to enable the computer to execute corresponding flows implemented by the terminal in each method of the embodiments of the disclosure. For simplicity, elaborations are omitted herein.

The embodiments of the disclosure also provide a computer program product, which includes a computer program instruction, the computer program instruction enabling a computer to execute the method of the embodiments of the disclosure.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by using different methods, but such realization should not be considered to extend beyond the scope of the disclosure.

Those skilled in the art may clearly learn about that specific working processes of the system, device and unit described above may refer to the corresponding processes in the above method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, the device or the units, and may be electrical and mechanical or adopt other forms.

The units described as separate parts may or may not be physically separated, and parts displayed as units may or may not be physical units, that is, may be located in the same place, or may also be distributed to multiple network units. A part or all of the units may be selected to achieve the purpose of the solutions of the embodiments according to a practical requirement.

In addition, functional units in each embodiment of the disclosure may be integrated into a processing unit, each unit may also physically exist independently, and two or more than two units may also be integrated into a unit.

When being implemented in form of software functional unit and sold or used as an independent product, the function may also be stored in a computer-readable storage medium. Based on such an understanding, an essential part of the technical solutions in the disclosure, a part of the technical solutions making contributions to the prior art, or a part of the technical solutions may be embodied in a form of a software product. The computer software product is stored in a storage medium and includes several instructions configured to enable a computer device (which may be a personal computer, a server, a network device or the like) to execute all or a part of the operations of the method in each embodiment of the disclosure. The above-mentioned storage medium includes: various media capable of storing program codes such as a U disk, a mobile hard disk, a Read-Only Memory (ROM), a Random Access Memory (RAM), a magnetic disk and an optical disk.

The foregoing is only the specific embodiments of the disclosure, and the scope of protection of the disclosure is not limited thereto. Any variations or replacements easily appreciated by those skilled in the art within the technical scope disclosed by the disclosure shall fall within the scope of protection of the disclosure. Therefore, the scope of protection of the disclosure shall conform to the scope of protection of the claims.

## Claims

1. A method for determining a synchronization source priority, comprising:

   determining, by a terminal, first synchronization source priority information based on at least one of capacity information or service class information of the terminal; and
   sending, by the terminal, the first synchronization source priority information.

2. The method of claim 1, further comprising:
   determining, by the terminal, the capacity information of the terminal based on first-type information, the first-type information comprising at least one of following information: clock accuracy, a phase-locked loop frequency deviation, battery power or transmission power.

3. The method of claim 2, wherein the determining, by the terminal, the capacity information of the terminal based on the first-type information comprises:
   performing, by the terminal, weighting summation processing on the information comprised in the first-type information to determine the capacity information of the terminal.

4. The method of claim 1, further comprising:
   determining, by the terminal, the service class information based on second-type information, the second-type information comprising at least one of following information: a transmission rate of service data, a compression coding manner for the service data, an emergency degree of the service data or clarity of the service data.

5. The method of claim 4, wherein the determining, by the terminal, the service class information based on the second-type information comprises:

   performing, by the terminal, weighting summation processing on the information comprised in the second-type information to determine an initial service class; and
   determining, by the terminal, the service class information based on a maximum value in the initial service class and a preset service class.

6. The method of claim 1, wherein the sending, by the terminal, the first synchronization source priority information comprises: sending, by the terminal, the first synchronization source priority information in a broadcast, unicast or multicast manner.

7. The method of any one of claims 1 to 6, further comprising:
   updating, by the terminal, a first synchronization source priority list of the terminal at a first period based on the first synchronization source priority information.

8. The method of any one of claims 1 to 7, wherein the sending, by the terminal, the first synchronization source priority information comprises:
   sending, by the terminal, the first synchronization source priority information at a second period.

9. The method of claim 8, wherein the first period and the second period are determined based on a service measurement period; and
the first period and the second period are identical or different.

10. The method of claim 1, further comprising: receiving, by the terminal, second synchronization source priority information of a first node device, the first node device being any node device connected with the terminal.

11. The method of claim 10, further comprising: updating, by the terminal, a first synchronization source priority list of the terminal based on the first synchronization source priority information and the second synchronization source priority information, the first synchronization source priority list comprising a plurality of synchronization sources ranked based on synchronization source priority information; and
determining, by the terminal, the synchronization source with a highest priority based on the first synchronization source priority list.

12. The method of claim 1, further comprising: receiving, by the terminal, a second synchronization source priority list of a first node device, the first node device being any node device connected with the terminal.

13. The method of claim 12, further comprising: updating, by the terminal, a first synchronization source priority list of the terminal based on the second synchronization source priority list.

14. The method of claim 7, 11 or 13, wherein a sequence of the synchronization sources in the first synchronization source priority list is related to priorities of the synchronization sources; and
the priority of the synchronization source is positively related to at least one of the capacity information or the service class information of the terminal.

15. The method of claim 11, wherein the determining, by the terminal, the synchronization source with the highest priority based on the synchronization source priority list comprises:
in response to that the terminal is in a first mode, determining the synchronization source with the highest priority based on the sequence in the first synchronization source priority list, wherein quality of communication between the terminal and a network device does not meet a preset requirement in response to the terminal is in the first mode.

16. The method of claim 10, further comprising: sending, by the terminal, the second synchronization source priority information to a second node device, the second node device being another node device, except the first node device, in node devices connected with the terminal.

17. The method of claim 7, 11 or 13, further comprising: sending, by the terminal, the first synchronization source priority list to the second node device, the second node device being another node device, except the first node device, in the node devices connected with the terminal.

18. The method of claim 10, wherein receiving, by the terminal, the second synchronization source priority information of the first node device comprises:
receiving, by the terminal, the second synchronization source priority information which is sent by the first node device in a unicast, multicast or broadcast manner.

19. The method of claim 12 or 13, wherein the receiving, by the terminal, the second synchronization source priority list of the first node device comprises:
receiving, by the terminal, the second synchronization source priority list which is sent by the first node device in a unicast, multicast or broadcast manner.

20. A terminal, comprising a processing unit and a communication unit, wherein

the processing unit is configured to determine first synchronization source priority information based on at least one of capacity information or service class information of the terminal; and
the communication unit is configured to send the first synchronization source priority information determined by the processing unit.

21. The terminal of claim 20, wherein the processing unit is further configured to determine the capacity information of the terminal based on first-type information, the first-type information comprising at least one of following information:
clock accuracy, a phase-locked loop frequency deviation, battery power or transmission power.

22. The terminal of claim 21, wherein the processing unit is configured to perform weighting summation processing on the information comprised in the first-type information to determine the capacity information of the terminal.

23. The terminal of claim 20, wherein the processing unit is further configured to determine the service class information based on second-type information, the second-type information comprising at least one of following information: a transmission rate of service data, a compression coding manner for the service data, an emergency degree of the service data or clarity of the service data.

24. The terminal of claim 23, wherein the processing unit is configured to: perform weighting summation processing on the information comprised in the second-type information to determine an initial service class; and determine the service class information based on a maximum value in the initial service class and a preset service class.

25. The terminal of claim 20, wherein the communication unit is configured to send the first synchronization source priority information in a broadcast, unicast or multicast manner.

26. The terminal of any one of claims 20 to 25, wherein the processing unit is further configured to update a first synchronization source priority list of the terminal at a first period based on the first synchronization source priority information.

27. The terminal of any one of claims 20 to 26, wherein the communication unit is configured to send the first synchronization source priority information at a second period.

28. The terminal of claim 27, wherein the first period and the second period are determined based on a service measurement period; and
the first period and the second period are identical or different.

29. The terminal of claim 20, wherein the communication unit is further configured to receive second synchronization source priority information of a first node device, the first node device being any node device connected with the terminal.

30. The terminal of claim 29, wherein the processing unit is further configured to update a first synchronization source priority list of the terminal based on the first synchronization source priority information and the second synchronization source priority information, the first synchronization source priority list comprising multiple synchronization sources ranked based on synchronization source priority information; and
the processing unit is further configured to determine the synchronization source with a highest priority based on the first synchronization source priority list.

31. The terminal of claim 20, wherein the communication unit is further configured to receive a second synchronization source priority list of the first node device, the first node device being any node device connected with the terminal.

32. The terminal of claim 31, wherein the processing unit is further configured to update a first synchronization source priority list of the terminal based on the second synchronization source priority list.

33. The terminal of claim 26, 30 or 32, wherein a sequence of synchronization sources in the first synchronization source priority list is related to priorities of the synchronization sources; and
the priority of the synchronization source is positively related to at least one of the capacity information or the service class information of the terminal.

34. The terminal of claim 30, wherein the processing unit is configured to determine the synchronization source with the highest priority based on the sequence in the first synchronization source priority list in response to that the terminal is in a first mode, wherein quality of communication between the terminal and a network device does not meet a preset requirement in response to that the terminal is in the first mode.

35. The terminal of claim 29, wherein the communication unit is further configured to send the second synchronization source priority information to a second node device, the second node device being another node device, except the first node device, in node devices connected with the terminal.

36. The terminal of claims 26, 30 or 32, wherein the communication unit is further configured to send the first synchronization source priority list to the second node device, the second node device being another node device, except the first node device, in the node devices connected with the terminal.

37. The terminal of claim 29, wherein the communication unit is configured to receive the second synchronization source priority information which is sent by the first node device in a broadcast, unicast or multicast manner.

38. The terminal of claim 31 or 32, wherein the communication unit is configured to receive the second synchronization source priority list which is sent by the first node device in a broadcast, unicast or multicast manner.

39. A terminal, comprising a processor and a memory, wherein the memory is configured to store a computer program, and the processor is configured to, when calling and running the computer program stored in the memory, execute the method of any one of claims 1 to 19.

40. A chip comprising a processor which is configured to, when calling and running a computer program in a memory, implement the method of any one of claims 1 to 19.

41. A computer-readable storage medium having stored thereon a computer program, the program, when being executed by a processor, implements the method of any one of claims 1 to 19.

42. A computer program product comprising a computer program instruction, the computer program instruction enabling a computer to execute the method of any one of claims 1 to 19.

43. A computer program which, when running in a computer, enables the computer to execute the method of any one of claims 1 to 19.

**FIG. 1**

| A terminal determines first synchronization source priority information based on capacity information and/or service class information of the terminal | 101 |

| The terminal sends the first synchronization source priority information | 102 |

**FIG. 2**

| A terminal determines first synchronization source priority information based on capacity information and/or service class information of the terminal | 201 |

| The terminal sends the first synchronization source priority information | 202 |

| The terminal receives second synchronization source priority information of a first node device, the first node device is any node device connected with the terminal | 203 |

**FIG. 3**

High

V-c

Second lowest (3)          Highest (1)

Low ———————————————————→   High
                                V-Qos

Lowest (4)                Second highest (2)

Low

**FIG. 4**

| A terminal determines first synchronization source priority information based on capacity information and/or service class information of the terminal | 301 |

↓

| The terminal sends the first synchronization source priority information | 302 |

↓

| The terminal receives a second synchronization source priority list of a first node device, the first node device is any node device connected with the terminal | 303 |

**FIG. 5**

```
┌─────────────────────────┐
│  Communication unit     │
│         42              │
└─────────────────────────┘
            │
┌─────────────────────────┐
│   Processing unit       │
│         41              │
└─────────────────────────┘
```

**FIG. 6**

```
┌──────────────────────────────────────────────┐
│                  Terminal                      │
│   ┌───────────────┐   ┌───────────────┐       │
│   │   Memory      │   │  Processor    │       │
│   │    620        │   │    610        │       │
│   └───────────────┘   └───────────────┘       │
│          ⇕                   ⇕                 │
│   ⇦══════════════════════════════════⇨        │
│                    ⇕                           │
│          ┌───────────────────┐                │
│          │   Transceiver     │                │
│          │      630          │                │
│          └───────────────────┘                │
└──────────────────────────────────────────────┘
```

**FIG. 7**

```
┌──────────────────────────────────────────────┐
│                 Chip 700                       │
│   Input                                        │
│   interface   ┌───────────────┐                │
│   730         │  Processor    │                │
│       ╲       │    710        │                │
│   ┌┐          └───────────────┘          ┌┐    │
│   ││                 ⇕                    ││    │
│   ││ ═══════════════════════════════════ ││    │
│   └┘                 ⇕                    └┘    │
│          ┌───────────────┐          ╱          │
│          │   Memory      │     Output          │
│          │    720        │     interface       │
│          └───────────────┘       740           │
└──────────────────────────────────────────────┘
```

**FIG. 8**

## INTERNATIONAL SEARCH REPORT

| | |
|---|---|
| | International application No. |
| | **PCT/CN2018/095852** |

**A.    CLASSIFICATION OF SUBJECT MATTER**

H04W 56/00(2009.01)i

According to International Patent Classification (IPC) or to both national classification and IPC

**B.    FIELDS SEARCHED**

Minimum documentation searched (classification system followed by classification symbols)

H04W56/-

Documentation searched other than minimum documentation to the extent that such documents are included in the fields searched

Electronic data base consulted during the international search (name of data base and, where practicable, search terms used)

USTXT; EPTXT; CNTXT; CNABS; WOTXT; VEN; CNKI: 终端, 能力, 业务等级, 同步源, 优先级, 车联网, 节点, 用户设备, 全球导航卫星系统, 更新, terminal, capability, business level, synchronization source, priority, V2X, node, user equipment, GNSS, update

**C.    DOCUMENTS CONSIDERED TO BE RELEVANT**

| Category* | Citation of document, with indication, where appropriate, of the relevant passages | Relevant to claim No. |
|---|---|---|
| X | CN 106998575 A (KT CORPORATION) 01 August 2017 (2017-08-01)<br>    description, paragraphs 12-14 and 26 | 1-43 |
| A | CN 107295625 A (CHINA ACADEMY OF TELECOMMUNICATIONS TECHNOLOGY)<br>24 October 2017 (2017-10-24)<br>    entire document | 1-43 |
| A | CN 108141856 A (LG ELECTRONICS INC.) 08 June 2018 (2018-06-08)<br>    entire document | 1-43 |
| A | KR 20170093333 A (INNOVATIVE TECHNOLOGY LAB CO., LTD.) 16 August 2017<br>(2017-08-16)<br>    entire document | 1-43 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 March 2019** | **03 April 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2018/095852**

| Patent document cited in search report | | | Publication date (day/month/year) | Patent family member(s) | | | Publication date (day/month/year) |
|---|---|---|---|---|---|---|---|
| CN | 106998575 | A | 01 August 2017 | US | 2017215119 | A1 | 27 July 2017 |
| | | | | KR | 20170088744 | A | 02 August 2017 |
| | | | | KR | 1882102 | B1 | 27 August 2018 |
| CN | 107295625 | A | 24 October 2017 | WO | 2017167254 | A1 | 05 October 2017 |
| | | | | KR | 20180124938 | A | 21 November 2018 |
| | | | | EP | 3439379 | A1 | 06 February 2019 |
| CN | 108141856 | A | 08 June 2018 | EP | 3343989 | A1 | 04 July 2018 |
| | | | | WO | 2017034340 | A1 | 02 March 2017 |
| | | | | US | 2018270722 | A1 | 20 September 2018 |
| KR | 20170093333 | A | 16 August 2017 | | None | | |

Form PCT/ISA/210 (patent family annex) (January 2015)